# EUROPEAN PATENT APPLICATION

(11) **EP 1 560 316 A2**
(43) Date of publication of application: **03.08.2005**
(21) Application number: 05002035.3
(22) Date of filing: 01.02.2005
(51) Int. Cl.: H02K 13/04

(54) **Electric motor with commutator, and manufacturing method of armature and starter motor for engine**

(30) Priority: 02.02.2004 JP 2004024961
(71) Applicant: Hitachi, Ltd., Tokyo 100-8280 (JP); Hitachi Car Engineering Co., Ltd., Hitachinaka-shi, Ibaraki 312-0062 (JP)
(72) Inventor: Abe, Mitsutoshi, Hitachinaka-shi Ibaraki-ken 312-0062 (JP); Yanagawa, Norio, Hitachinaka-shi Ibaraki-ken 312-0062 (JP); Karino, Kimiji, Hitachinaka-shi Ibaraki-ken 312-0062 (JP)
(74) Representative: Beetz & Partner Patentanwälte

(57) **Abstract**

The invention relates to an electric motor, a starter for starting an internal combustion engine and a method for manufacturing armatures for said electric motor, wherein coil connecting parts (34e) on the vertical sections (34d) of commutator segments (34b) are formed so that the coil conductors (32a) may be assembled axially. On the outer circumference of the coil connecting part (34e) the commutator segments (34b) is formed in a body with the lock members (34f) that prevent the coil conductor (32a) from going out in the centrifugal direction from the coil connecting part (34e). Therefore, the rotating strength (the centrifugal strength) of coil conductors (32a) can be improved in the coil connecting part (34e) without any additional member for the lock member (34f) and without increasing the number of manufacturing steps pertaining to the lock member (34f).

## Description

### CLAIM OF PRIORITY

The present application claims priority from Japanese application serial no. 2004-024961, filed on February 2, 2004, the content of which is hereby incorporated by reference into this application.

### BACKGROUND OF THE INVENTION

This invention relates to an electric motor with a commutator, a method of manufacturing its armatures, and a starter.

There have been various methods to connect a commutator of an electric motor to an armature coil of the motor. For example, Japanese laid- open Patent Publication No. Hei 08-275464 and Japanese Laid-open Patent Publication No. Hei 07-67305 disclose such methods.

Japanese laid- open Patent Publication No. Hei 08-275464 discloses a method of connecting a commutator to an armature coil by fitting the leading part of the armature coil to an open groove on a commutator segment and electrically crimping the open groove. Further, Patent Document 1 improves the rotating strength of the connecting part of the armature coil by making the leading part of the armature coil protrude from the end surface of the connecting part and securing the leading part of the armature coil with an insulator.

Japanese Laid-open Patent Publication No. Hei 07-67305 discloses a method of connecting a commutator to an armature coil by fitting the leading part of the armature coil to an open groove on a commutator segment and soldering thereof. Further, Japanese Laid-open Patent Publication No. Hei 07-67305 provides a coil retaining member between the armature core and the commutator. This is assumed to assure the rotating strength of the connecting part of the armature coil.

### SUMMARY OF THE INVENTTION

As for the connecting method of Patent Document 1 which secures the leading part of an armature coil protruded from the end surface of the connecting part with an insulator, however, the rotating strength of the armature coil is dependent upon the mechanical characteristics of the insulator. Further, this method requires many manufacturing steps and a greater axial length of the armature because the leading part of the armature coil axially protrudes from the connecting part.

As for the connecting method of Patent Document 2 which provides a coil retaining member between the armature core and the commutator, this method requires more components to assure the rotating strength of the connecting part of the armature coil and increases the production cost.

This invention provides an electric motor with a commutator that can improve the rotating strength of a connecting part between the armature coil and the commutator without increasing the number of manufacturing steps and the production cost.

This invention is characterized in that the electric motor with a commutator may consist of a coil connecting part to connect an armature coil to each of the commutator segments that are provided on the outer circumference of the commutator and/or a lock mechanism to prevent the armature coil to slip away in the centrifugal direction at the coil connecting part. The armature coil may be formed on the commutator segment so that the armature coil may be assembled from the axial direction, and/or that the lock mechanism is formed in a body on the commutator segment when the coil connecting part is formed on the commutator segment.

In accordance with this invention, the coil connecting part is formed on the commutator segment so that the armature coil may be assembled axially. With this, the lock mechanism is formed in a body on the commutator segment. Therefore, this invention requires no additional material for the lock mechanism and no manufacturing step pertaining to the lock mechanism.

Further, this invention provides a method of manufacturing armatures for the above electric motors with a commutator.

Furthermore, this invention provides a starter having the above electric motor with a commutator.

As this invention requires no additional member for a lock mechanism and does not increase the number of manufacturing steps pertaining to the lock mechanism, this invention can improve the rotating strength at the connecting part between the armature coil and the commutator and the reliability without increase the production cost.

### BRIEF DESCRIPTION OF THE DRAWINGS

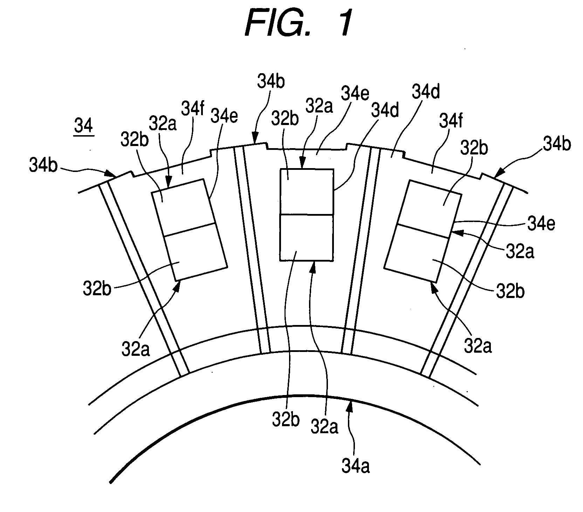

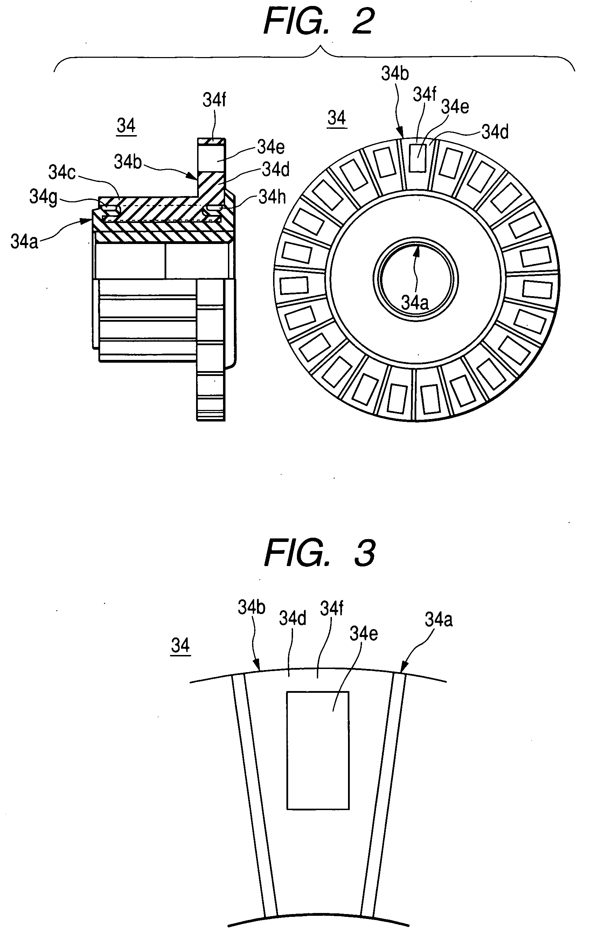

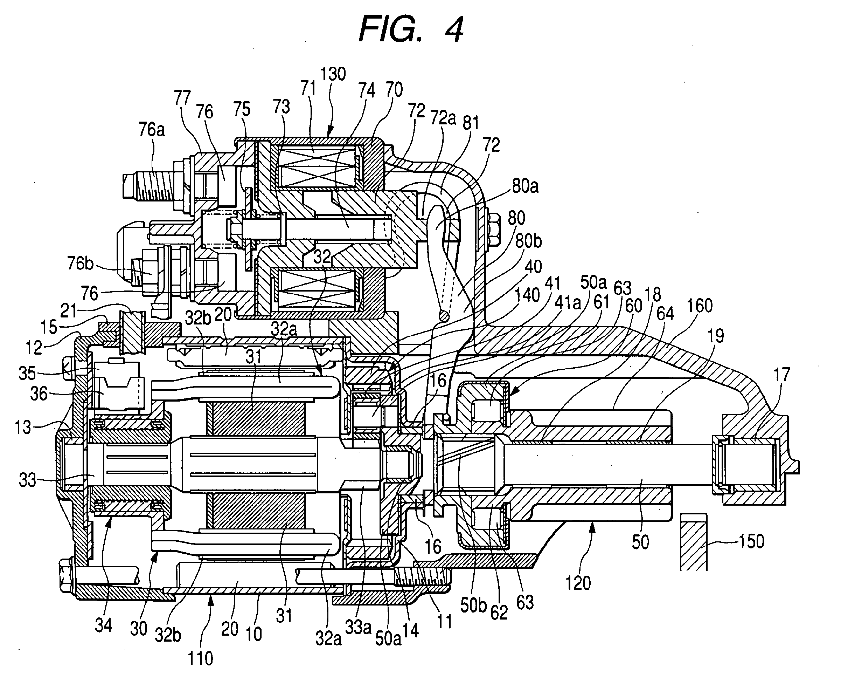

FIG. 1 is a magnified plan view of the raiser section of the commutator in the DC motor working as a starter which is the first embodiment of this invention, showing the coil connecting parts having coil conductors are hot crimped; FIG. 2 shows the partial sectional view of the commutator of FIG. 1 and the whole configuration of the commutator; FIG. 3 shows the magnified view of a raiser section which is part of the commutator of FIG. 2; FIG. 4 shows the vertical sectional view of the whole starter which is the first embodiment of this invention;

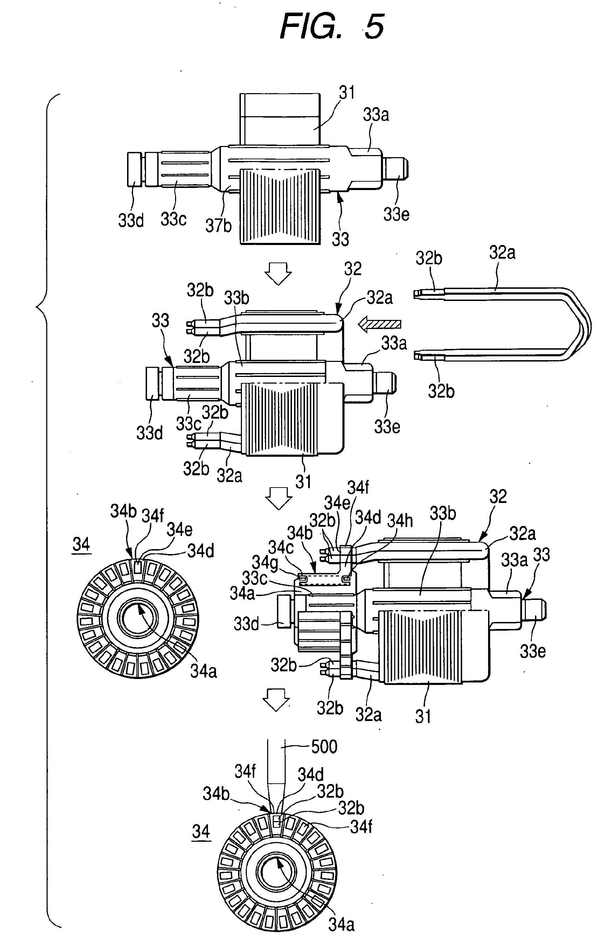

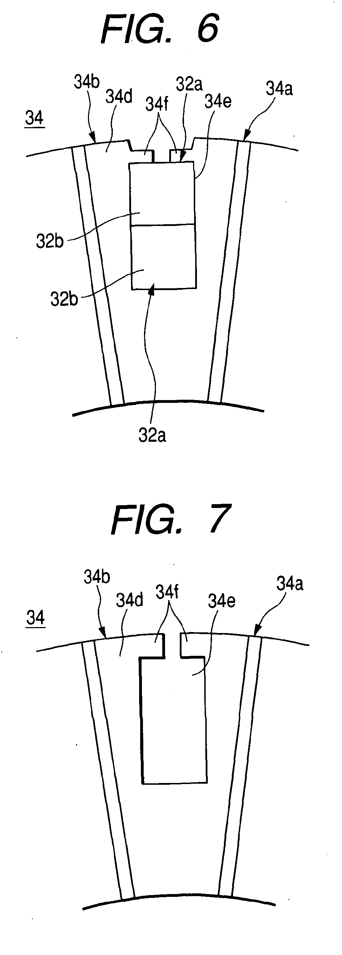

FIG. 5 shows explanatory views for a method of manufacturing an armature of a DC motor working as a starter which is the first embodiment of this invention; FIG. 6 shows the magnified view of a raiser section which is part of the commutator of a DC motor working as a starter which is the second embodiment of this invention, showing the coil connecting parts having coil conductors are hot crimped; and.
FIG. 7 shows the magnified view of a raiser section which is part of the commutator of FIG. 6, showing the coil connecting parts without coil conductors.

### DESCRIPTION OF THE PREFERRED EMBODIMENTS OF THE INVENTION

Below are listed representative preferred embodiments of this invention.

An electric motor with a commutator comprising a yoke having a magnetic field and an armature that can rotate with an air gap therebetween, wherein
said armature consist of a shaft, an armature core on the shaft, an armature coil wound on the armature core, and a commutator provided on the shaft;
a plurality of said commutator segments are provided on the outer circumference of said commutator to be in contact with brushes that are connected to said armature coil to transfer power to and from said armature;
each of said commutator segments is equipped with a coil connecting part for connection with said armature coil and a lock member to prevent said armature coil from going out in the centrifugal direction at the coil connecting part;
the coil connecting part is formed so that said armature coil may be assembled axially; and
said lock member is formed in a body as the result of formation of said coil connecting part on said commutator segment.

A method of manufacturing armatures for electric motors with a commutator comprising
a step of assembling and fitting an armature core to a shaft,
a step of assembling an armature coil to said armature core,
a step of fitting, to said shaft, a commutator having a plurality of commutator segments on its outer circumference each of which has a coil connecting part to connect said armature coil in an axial direction and a lock member to prevent said armature coil from going out in a centrifugal direction in said coil connecting part in a body on said commutator segment and inserting said armature coil axially into said coil connecting part to assemble said armature coil to said coil connecting part, and
a step of hot-crimping said coil connecting parts having said armature coil thereon.

A starter for starting an internal combustion engine comprising an electric motor which generates rotational power to start the engine, a transmission mechanism which transmits said rotational power of the motor to the engine, and a switching mechanism which controls electric connection between said electric motor and a power supply, wherein
said electric motor consists of a yoke having a magnetic field and an armature that can rotate with an air gap therebetween,
said armature consist of a shaft, an armature core on the shaft, an armature coil wound on the armature core, and a commutator provided on the shaft;
a plurality of said commutator segments are provided on the outer circumference of said commutator to be in contact with brushes that are connected to said armature coil to transfer power to and from said armature;
each of said commutator segments is equipped with a coil connecting part for connection with said armature coil and a lock member to prevent said armature coil from going out in the centrifugal direction at the coil connecting part;
the coil connecting part is formed so that said armature coil may be assembled axially; and
said lock member is formed in a body by formation of said coil connecting part on said commutator segment.

### [Embodiment 1]

A first embodiment of this invention will be explained below with reference to FIG. 1 to FIG. 5

FIG. 4 shows the whole configuration of a starter 100. The starter 100 receives DC power from a battery (not shown in the drawing) on a vehicle, generates a rotational driving force to start an internal combustion engine (not shown in the drawing) of the vehicle, and transmits the rotational driving force to a ring gear 150 of the engine. The starter 100 of this embodiment is a starter equipped with a reduction gear mechanism and mainly consists of four functional blocks: driving force generating block, driving force transmitting block, driving block, and reduction gear block.

The driving force generating block generates a rotational driving force to start the engine. The block consists of a DC motor 110. The driving force transmitting block transmits a rotational driving force from the DC motor 110 to the ring gear 150 of the engine and consists of a clutch mechanism 120. The driving block works as an actuator mechanism that axially moves the clutch mechanism 120 and a switch mechanism that controls electrical connections between the DC motor 110 and the battery (the electric on/off switching between them). The switch mechanism consists of a solenoid switch 130. The reduction gear block reduces the rotational speed of the DC motor 110 at a preset reduction ratio and transmits it to the clutch mechanism 120. The reduction gear block consists of a planetary gear mechanism 140. The configurations of the above blocks and mechanisms are respectively explained below.

In the description below, the "front" side of the starter 100 means the side on which the axial ring gear 150 exists (the right side of the drawing) and the "rear" side of the starter 100 means the side opposite the ring gear side (the left side of the drawing).

First will be explained the configuration of the DC motor 110.

The DC motor 110 is fixed to the front bracket 160. The outer casing of the DC motor 110 consists of a cylindrical yoke 10. The yoke 10 forms a magnetic circuit of the magnetic field (stator). The yoke 10 has a front cover 11 on the front end a rear cover 12 on the rear end. The yoke 10 contains a plurality of magnetic fields (field poles) 20 of permanent magnet. Although the magnetic field 20 of this embodiment is made of permanent magnet, they can be made of an armature core (pole core) which forms a magnetic circuit together with the yoke 10 and windings (stator windings) wound on the armature core.

An armature (rotor) 30 is provided in the inner circumferential side of the magnetic fields 20 and can rotate with an air gap between the armature and the field poles. The armature 30 has an armature core 31 (a rotor core). This armature core 31 forms a magnetic circuit on the armature side and is fit to the shaft 33. The armature core 31 has a plurality of slots that run through axially (not shown in the drawing) at a preset interval on the outer circumference of the core. Each slot contains a coil conductor 32a which constitutes the armature coil 32 (the rotor winding) with an insulating member 32b between the slot wall and the coil conductor 32a. The coil conductor 32a is made by double-folding a square flat (or flat) coil in a U-shape so that a step in the radial direction of the armature core 31 may be formed on two opposing straight sides. The two opposing straight sides of the coil conductor 32a are inserted into two different slots across a plurality of slots. Therefore, each of the slots contains the straight sides of two coil conductors 32a of different equitant directions with an insulating member 32b between the slot wall and the coil conductor 32a.

The commutator 34 is provided closer to the rear than the armature core 31 on the shaft 33. The configuration of the commutator 34 will be explained in detail later. To the commutator 34 are mechanically connected the ear ends of coil conductors 32a which protrude from the rear end f the armature core 31 to the rear side. The connection of the coil ends of the coil conductors 32a to the commutator 34 will be explained in detail later. An armature gear 33a is provided closer to the axial front side than the armature core 31 on the shaft 33. The rear end of the shaft 33 is pivotally supported by a bearing 13 mounted on the rear cover 12. The front end of the shaft 33 is pivotally supported by a bearing 14 mounted on the rear end of a pinion shaft 50.

Four brushes 35 are in contact with the outer circumferential surface of the commutator 34 to slide on it. The brushes 35 are divided into two: two positive brushes (+) that pass DC power from the battery to the commutator 34 and two negative brushes (-) that receive DC power flowing through the armature coil 32 via the commutator 34 and send it to the ground of the vehicle. Each brush 35 is supported by a brush holder 36 on the rear cover 12 and pushed against the outer circumferential surface of the commutator 34 by a spring as a pressing means. One end of a brush lead wire (not shown in the drawing) is connected to each of the brushes 35. The other end of the lead wire of the positive brush is connected to a lead wire 21 connected to a terminal of the solenoid switch 130. The lead wire 21 runs from the outside of the motor into the motor through an insulating bush 15 provided between part of the yoke 10 and part of the rear cover 12. The other end of the lead wire of the negative brush is electrically connected to the ground of the vehicle.

Next will be explained the configuration of the planetary gear mechanism 140.

The planetary gear mechanism 140 consists of an armature gear 33a placed on the central shaft of the mechanism 140, an annular internal gear 40 that is concentrically placed around the armature gear 33a, and a plurality of planet gears 41 that are placed in the annular space between the armature gear 33a and the internal gear 40. These gears are engaged with each other. The outer periphery of the internal gear 40 is fixed to the front cover 11. The planet gears 41 are equally spaced circumferentially. Each planet gear 41 has a planet shaft 41a on its central axis. The front end of the planet shaft 41a extends toward the front side and pivotally supported by the collar 50a of a pinion shaft 50.

Next will be explained the configuration of the clutch mechanism 120.

The clutch mechanism 120 consists of a pinion shaft 50 and a roller clutch 60 that is mounted on the outer circumference of the pinion shaft 50. The pinion shaft 50 is positioned concentrically with the shaft 33. The pinion shaft 50 has a collar 50a on the rear end. As already explained, the planet shaft 41a is pivotally supported by this collar 50a. A bearing 14 is supported in the center of the rear end of the pinion shaft 50. The front end of the pinion shaft 50 is pivotally supported by a bearing 17 on the front bracket 160. The rear end of the pinion shaft 50 which is closer to the front side than the collar 50a is pivotally supported by a bearing 16 mounted on the inner circumference of the front cover 11. The rear end of the pinion shaft 50 has a helical spline groove 50b on the outer circumference which is closer to the front side than the position at which the shaft 50 is supported by the bearing 16.

The roller clutch 60 is a one-way clutch consisting of a clutch outer 61, clutch inner 62, a roller 63, and a spring (not shown in the drawing), axially driven on the pinion shaft by a driving force from the solenoid switch 130, and simultaneously rotated together with the pinion shaft 50. The clutch outer 61 is engaged with the helical spline groove 50b axially driven on the pinion shaft by a driving force from the solenoid switch 130, and simultaneously rotated together with the pinion shaft 50. The clutch inner 62 is placed in the inner circumferential side of the clutch outer 61. Rollers 63 are provided between the clutch outer 61 and the clutch inner 62 to transmit the rotational driving force from the clutch outer 61 to the clutch inner 62. The front end of the clutch inner 62 has a pinion 64 mounted in a body. The pinion 64 is engaged with a ring gear 150 of the engine to transmit the rotational driving force that comes to the clutch mechanism 120 via the planetary gear mechanism 140 from the DC motor 110 to the ring gear 150 of the engine. The pinion 64 is supported by bearings 18 and 19 to be able to rotate and axially slide on the outer circumference of the pinion shaft 50 and is rotated together with the clutch inner 62.

Next will be explained the configuration of the solenoid switch 130.

The solenoid switch (also called a magnet switch) is fixed to the front bracket 160 in parallel to the DC motor 110. An excitation coil 71 which is excited by power to generate an electromagnetic force is provided in the in the annular inner space of a coil case 70 that is part of the magnetic circuit. The coil case 70 forms part of the outer casing of the solenoid switch 130. The inner front end of the coil case 70 has a plunger 72 (a moving core) which can axially slide in the inner circumferential side of the coil case. The plunger 72 moves axially in the inner circumferential side of the coil case by electromagnetic forces generated by the excitation coil 71. On the inner rear end of the coil case 70, a boss 73 constituting part of the magnetic circuit (a stator core) is provided opposite the plunger 72. A moving shaft 74 that axially passes through the boss 73 is slidably provided in the center of the boss 73.

A contact case 77 is provided on the rear end of the coil case 70. The contact case 77 forms part of the outer casing of the solenoid switch 130. The outer periphery of the boss 73 is sandwiched between the rear end of the coil case 70 and the front end of the contact case 77. A moving contact 75 which is a moving side of the contact to electrically turn on and off a power circuit between the DC motor 110 and the battery is provided on the rear end of the moving shaft 74 inside the contact case 77. The moving contact 75 is a toric conductive member. A pair of fixed contacts 76 which are the stationary side of the contact that electrically turn on and off a power circuit between the DC motor 110 and the battery are provided opposite to the moving contact 75 on the rear end of the contact case 77. The moving contact 75 and the fixed contacts 76 are disposed to move axially to touch and detach each other. The rear end of the fixed contact 76 extends from the inside of the contact case 77 to the outside through the contact case 77. One rear end of the fixed contact 76 has a battery terminal 76a in a body. The terminal 76a is electrically connected to the battery. The other rear end of the fixed contact 76 has a motor terminal 76b in a body. The lead wire 21 is connected to this terminal 76b. The rear end of the contact case 77 also has a switch terminal (not shown in the drawing). This switch terminal is electrically connected to an ignition key switch (not shown in the drawing) which is electrically connected to the excitation coil 71 and the battery.

The front end of the plunger 72 has a protrusion 72a that protrudes in the front side. The protrusion 72a has a square hole 72b to which the plunger catch 80a of the shift lever 80 is fit for engagement. In other words, this links the plunger 72 and the shift lever 80. The shift lever 80 works to transmit a driving force from the plunger 72 to the clutch outer 61. A fulcrum 80b is provided on the intermediate part of the shift lever 80. The fulcrum 80b is in contact with the front bracket and engaged with a lever spring 81. The lever spring 81 works as a fulcrum of action of the shift lever 80 and supports the shift lever 80 so that the lever 80 can rotate around the fulcrum 80b. The load of the lever spring 81 works to make the pinion 64 bite the ring gear 150 when the engine starts and to return the plunger 72 and the shift lever 80 to their home positions after the engine starts. The other side of the shift lever 80 (opposite to the plunger catch 80a) is bifurcated to grab the rear end of the clutch outer 61 perpendicularly to the axial direction so that the rear end of the clutch outer 61 can rotate.

Next will be explained the operation of the starter 100.

When the operator turns on the ignition key switch to start the engine, power is supplied from the battery to the excitation coil 71. The excitation coil 70 is excited by this power and generates an electromagnetic force. When this force generates, an attracting force works on the plunger 72 to move to the rear side. As the result, the plunger 72 starts to move to the rear side through the inside of the coil case 70 against the spring load of the lever spring 81 that works via the shift lever 91.

When the plunger 72 moves to the rear side, the shift lever 80 rotates counterclockwise around the fulcrum 80b that is supported by the lever spring 81. Simultaneously the roller clutch 60 and the pinion 64 move to the front side. In this case, if the teeth of the pinion 64 does not touch (or hit) the teeth of the ring gear, the pinion 64 directly engages with the ring gear 150. Contrarily, if the teeth of the pinion 64 touches (or hits) the teeth of the ring gear 150, the pinion 64 stops moving toward the front side.

Even after the pinion 64 stops moving, the plunger 72 keeps on moving to the rear side while bowing the lever spring 81 (or elastically deforming the lever 81). This makes the moving shaft 74 move to the rear side. At the same time, the moving contact 75 also moves to the rear side. When the moving shaft 74 moves a preset distance to the rear side (by the plunger 72), the moving contact 75 touches the fixed contact 76. As the result, the pair of fixed contacts is electrically connected by the moving contact 75 and the battery is electrically connected to the DC motor 110.

When the battery is electrically connected to the DC motor 110, the DC power is supplied from the battery to the brush 35 (the positive brush) via the battery terminal 76a, one of the fixed contact 76, the moving contact 75, the other fixed contact 76, the motor terminal 76b, the lead wire 21, and the brush lead. Then the DC power is supplied to the armature coil 32 through the commutator 34. With this, the armature 30 generates an electromagnetic force and rotates due to the magnetic action by the magnetic field 20. As the result, a rotational driving force generates.

The rotational driving force is transmitted to the planetary gear mechanism 140 via the armature gear 33a. By the rotation of the armature gear 33a, planet gears 41 in the planetary gear mechanism 140 rotate around the planet shaft 41a and revolve around the armature gear 33a. This reduces the rotational driving force transmitted from the armature gear 33a.

The reduced rotational driving force is then transmitted to the pinion shaft 50 that rotates by revolutions of the planet gears 41. Then the rotational driving force is transmitted from the pinion shaft 50 to the pinion 64 via the clutch outer 61, the roller 63, and the clutch inner 62. This drives the pinion 64 to rotate. In this case, if the pinion 64 is engaged with the ring gear 150, the ring gear 150 is driven to rotate by the rotational driving force of the pinion 64. If the pinion 64 is not engaged with the ring gear 150, while the pinion 64 rotates, the pinion 64 is pushed to the front side by the load of the lever spring 81 until the teeth of the pinion 64 engage with the teeth of the ring gear 150. When the teeth of the pinion 64 engage with the teeth of the ring gear 150, the rotational driving force is transmitted from the pinion 64 to the ring gear 150. As the result, the ring gear 150 is driven to rotate. When the rotational force of the ring gear 150 increases the rotational speed of the engine, the engine starts.

Next will be explained the configuration of the commutator 34 of the DC motor 110, and a connection of the commutator 34 and the coil conductor 32a of the armature coil 32 with reference to FIG. 1 to FIG. 3.

The commutator 34 is a cylindrical member having a collar on the front end. The main body of the commutator 34 is a cylindrical resin molded member 34a such as a press molded member of fiber-reinforced phenol resin. The resin molded member 34a has as many commutator segments as slots on the armature core on the circumference to form the conductive part 34b of the commutator 34. The conductive part 34b is a conductive member having an L-shaped cross section and formed in a body on the outer circumference of the resin molded member 34a. The conductive part 34b has a plane section 34c and a vertical section 34d. The plane section 34c has a plane in parallel with a line tangent to the outer circumference of the resin molded part 34a on the front side of the plane section 34c and embedding parts to be laid in the outer circumference of the resin molded part 34a on the back side of the plane section 34c. The vertical section 34d is provided on the front plane of the plane section 34c perpendicularly to the longitudinal end of the plane section 34c. A plurality of commutator segments 34b are provided on the outer circumferential surface of the resin molded part 34a so that the longitudinal direction of the plane section 34a may be along the axial direction, that the plane section 34c may be placed on the rear of the resin molded section 34a and that the vertical section 34d may be placed on the front side of the resin molded section 34a. As the result, the plane of the plane section 34c is provided circumferentially on the rear side of the resin molded section 34a and a brush contact section on which the brush 35 slides is formed. The vertical section 34d is provided circumferentially on the front side of the resin molded section 34a and a raiser section to which the rear end of the coil conductor 32a is connected is formed.

The vertical section 34d has a through-hole that extends axially. This through-hole is a coil connecting part 34e to which the rear ends of two coil conductors 32a are assembled axially. The rear ends of two coil conductors 32a are axially piled in the coil connecting part 34e. A lock member 34f is formed on the outer circumference of the coil connecting part 34e. The lock member 34f is made in a body with the commutator segment by the formation of the coil connecting part 34e. It is formed by one part of the commutator segment 34b which is situated outer in the radial direction than the coil connecting part 34e on the outer circumference of the vertical section. The lock member 34f is provided to prevent the coil conductor 32a (which is axially assembled on the coil connecting part 34e) from slipping out in the centrifugal direction (outward in the radial direction) when the commutator 34 rotates. After assembled to the coil connecting part 34e, the coil conductor 32a is hot-crimped, for example, by fusing. The hot-crimping consists of steps of heating the outer circumference of the lock member 34f while pressing a tool to the outer circumference of the lock member 34f and crimping the coil conductor 32a against the coil connecting part 34e. Therefore after hot-crimping, the lock member 34f (FIG. 1) is retracted to the center than it is before hot-crimping (FIG. 2 and FIG. 3). In other words, the outer circumferential surface of the vertical section 34d is radially dented in by hot-crimping. As the result, the outer circumference of the raiser section is patterned indented alternately.

The rear end of the embedding part of the plane section 34c is retained on the resin molded member 34a by a retaining ring 34g and the front end of the embedding part is retained there by a retaining ring 34h. These retaining rings 34g and 34h work to hold the commutator segments 34b on the resin molded member 34a against the centrifugal force caused by rotation of the commutator 34. The commutator segments 34b disposed on the outer circumference are electrically isolated from each other by the resin material of the resin molded member 34a.

Next will be explained a method of manufacturing the armature 30 of the DC motor 110 and more particularly a method of assembling coil conductors 32a to the commutator 34 with reference to FIG. 5.

### Step 1

### Preparing components of the armature 30

The components are an armature core 31, coil conductors 32a for the armature coil 32, a shaft 33, and a commutator 34.

The armature core 31 is prepared by punching out a low-carbon steel plate into toric pieces and laminating these pieces into a multi-layer core. When the toric pieces are punched out, a plurality of through-holes is simultaneously punched out on the outer circumference of each piece. When the pieces are laminated, these through-holes form slots for the coil conductors 32a on the outer circumference of the laminated core 21.

The shaft 33 is prepared by cold forging or cutting a carbon steel for machinery. In this case, a knurling section 33b to fit the armature core 31, a knurling section 33c to fit the commutator 34, an armature gear 33a and bearing supports 33d and 33e are formed on the outer periphery of the shaft 33.

The coil conductor 32a is prepared by the steps of bending an enamel-coated square flat copper coil to a U-shape, shaping the U-shaped coil to form steps on two opposing straight sides in the radial direction of the armature core 31, removing enamel coats from the leading and trailing ends of the U-shaped coil to form parts 32b to be connected to the commutator 34 which is smaller than the part to be inserted into the slot of the armature core 31, and making the ends of the connection parts 32b thinner to easily insert the coil conductor 32a into the slot of the armature core and to the coil connecting part 34e of the commutator 34 and increase the assembling efficiency of the armature 30.

The commutator 34 is prepared by the steps of forming, from a copper material, a plurality of commutator segments 34b each of which has a plane section 34c having a flat surface on the front side and an embedding part on the rear side and a vertical section 34d having a coil connecting part 34e and a lock member 34f which is formed in a body on the commutator segment 34b (by the formation of the coil connecting part 34e), placing the commutator segments 34b circumferentially at a preset interval in the die to form a cylindrical shape, fitting the retaining rings 34g and 34h to both ends of the embedding parts of the plane section 34c, injecting an insulating resin such as fiber-reinforced phenol resin into the die, and press-forming thereof. The resulting commutator 34 has a plurality of commutator segments that are electrically isolated from each other on the outer circumference of the resin molded part 34a.

### Step 2

Fitting the armature core 31 to the shaft 33 from one axial side and press-fitting the inner circumferential side of the armature core 31 into the knurling section 33b of the shaft 33

### Step 3

Insert the leading and trailing ends of each U-shaped coil conductor 32a into each slot on the outer circumference of the armature core 31 from one axial side (opposite to the knurling side 33c). In this case, the coil conductor 32a is inserted into two different slots with some slots between them. With this, the straight sides of the coil conductor 32a is set in the slot. The leading and trailing ends of the coil conductors axially protrude from one axial end (from the knurling ends 33c) of the armature core 31. The coil conductors are radially piled in each slot with the straight side of a coil conductor 32a from one circumferential side placed in the radial lower side (in the bottom of the slot) and with the straight side of a coil conductor 32a from the other circumferential side placed in the radial upper side (in the top of the slot). This is because the coil conductors 32a are shaped so that the straight side of the coil conductor 32a may have a step in the radial direction of the armature core 31.

Bend the leading and trailing ends of the coil conductor 32a that axially protrude from one axial end of the armature core 31 at an angle against the overstriding direction of the coil conductor 32a. Shape the coil conductors 32a to orient the coil connecting part 32b formed on each coil end to the axial direction. This radially overlaps the coil connecting part 32b of the coil conductor 32a overstriding from one circumferential direction and that 32b from the other circumferential direction. This is because the straight side of the coil conductor 32a corresponding to the coil connecting part which is in the outer circumferential side is positioned in the upper circumferential side and the coil connecting part which is in the inner circumferential side is positioned in the lower circumferential side.

### Step 4

Fitting the commutator 34 to the shaft 33 axially from the knurling side 33c of the shaft 33, press-fitting the commutator 34 into the knurling section 33c, inserting two connecting parts 32b that are overlapped in the radial direction of the armature core 31 axially into the associated coil connecting part 34e, and assembling them. In this case, the commutator 34 is assembled to the shaft 33 with the raiser section put in the armature core side 31. Part of the connecting part containing the front end of the coil conductor 32a protrudes axially from the end opposite to the armature core side 31 of the raiser section of the commutator 34.

### Step 5

Hot-crimping the coil connecting parts 34e, for example, by fusing while assembling two connecting parts 32b that are overlapped in the radial direction of the armature core 31 respectively to the associated coil connecting part 34e. Substantially, press the electric-heating tool 500 against the outer circumference of the lock member 34f, heat the outer circumference of the lock member 34f, and hot-crimping the connecting parts 32b to the coil connecting parts 34e. Therefore after hot-crimping, the lock member 34f is radially retracted to the center than it is before hot-crimping. In other words, the outer circumferential surface of the vertical section 34d is radially dented in by hot-crimping.

### Step 6

Cutting off part of the connecting parts 32b (containing the front ends of the coil conductors 32a) that axially protrude from the ends opposite to the armature core side 31 of the raiser section of the commutator 34 and obtaining the armature 30 of FIG. 4.

As explained above, this embodiment forms the coil connecting parts 34e on the vertical sections 34d of the commutator segments 34b so that the coil conductors 32a may be assembled axially. On the outer circumference of the coil connecting part 34e, this can form the commutator segments 34b in a body with the lock members 34f that prevent the coil conductor 32a from going out in the centrifugal direction from the coil connecting part 34e. Therefore, no additional member is required for the lock member 34. Further, this does not increase the manufacturing steps pertaining to the lock member 34f in the manufacturing process of the armatures 30 for DC motors 110.

Therefore, this embodiment can improve the rotating strength (the centrifugal strength) of the coil conductors 32a at the coil connecting parts 34e without increasing the number of manufacturing steps and the production cost.

### [Embodiment 2]

A second embodiment of this invention will be explained below with reference to FIG. 6 and FIG. 7.

This embodiment is a variation of Embodiment 1 in which the configurations of the lock member 34f and the coil connecting parts 34e on the vertical section 34d of the commutator segments 34b of the commutator 34 are different from those of Embodiment 1. The other configurations and the armature manufacturing method are the same as those of Embodiment 1. Repetition of the description on the same or similar components will be omitted. Only differences from Embodiment 1 will be explained below.

This embodiment forms grooves for coil connecting parts 34e. Each groove runs through axially and its end is open on the outer circumference. The circumferential width of the opening is smaller than that of the groove and that of the coil conductor 32a set in the coil connecting part 34e. The opening is located in the circumferential center of the outer side of the groove. Therefore, also in this embodiment, the coil conductor 32a is inserted into the coil connecting part 34e axially. As well as Embodiment 1, the coil connecting part 34e is formed on the vertical section 34d of the commutator segment 34b and consequently a lock member 34f in a body with the vertical section 34d is provided on the outer circumferential side of the coil connecting part 34e. As already explained, this embodiment forms the coil connecting part 34e from a groove which is open on the outer circumference. Therefore, the lock member 34f of this embodiment is made up by protrusions that protrude into the groove on the outer circumference, or that protrude oppositely in the circumferential direction with the groove opening therebetween.

After the coil conductor 32a is assembled to the coil connecting part 34e, the coil connecting part 34e is hot-crimped for example by fusing as well as Embodiment 1. In other words, the hot crimping is made by pressing the electric-heating tool 500 against the outer circumference of the lock member 34f, heating the outer circumferential side of the lock member 34f, and thus hot-crimping the coil conductor 32a to the coil connecting part 34e. Therefore, also in this embodiment, the lock member 34f after hot-crimping is radially retracted to the center than it is before hot-crimping (see FIG. 7). In other words, the outer circumferential surface of the vertical section 34d is radially dented in by hot-crimping.

Therefore, this embodiment as well as Embodiment 1 can form a lock member 34f (to prevent the coil conductor 32a from slipping out in the centrifugal direction from the coil connecting part 34e) in a body with the commutator segment 34b on the outer circumference of the coil connecting part 34e and can obtain the similar effect.

### Explanation of reference sign Symbols

- 20: Magnetic field
- 30: Armature
- 31: Armature core
- 32: Armature coil
- 32a: Coil conductor
- 33: Shaft
- 34: Commutator
- 34b: Commutator segment.
- 34e: Coil connecting part
- 34f: Lock member
- 100: Starter
- 110: DC motor
- 120: Clutch mechanism
- 130: Solenoid switch
- 140: Planetary gear mechanism
- 150: Ring gear

## Claims

1. An electric motor with a commutator (34) comprising a yoke (10) having a magnetic field and an armature (30) that can rotate with an air gap therebetween, wherein
said armature (30) consist of a shaft (33), an armature core (31) on the shaft (33), an armature coil (32) wound on the armature core (31), and a commutator (34) provided on the shaft (33);
a plurality of said commutator segments (34b) are provided on the outer circumference of said commutator (34) to be in contact with brushes (35) that are connected to said armature coil (32) to transfer power to and from said armature (30);
each of said commutator segments (34b) is equipped with a coil connecting part (34e) for connection with said armature coil (32) and a lock member (34f) to prevent said armature coil (32) from going out in the centrifugal direction at the coil connecting part (34e);
the coil connecting part (34e) is formed so that said armature coil (32) may be assembled axially; and
said lock member (34f) is formed in a body as the result of formation of said coil connecting part (34e) on said commutator segment (34b).

2. The electric motor according to claim 1, wherein said coil connecting part (34e) is a through-groove that extends axially and said lock member (34f) is a protrusion that extends into said groove.

3. The electric motor according to claim 1 or 2, wherein said coil connecting part (34e) is a through-hole that extends axially and said lock member (34f) is provided beyond said through-hole on the outer circumference of said commutator segment (34b).

4. The electric motor according to at least one of claims 1 to 3, wherein said lock member (34f) is hot-crimped and this hot crimping makes the outer circumferential surface of the commutator segment (34b) patterned indented.

5. A method of manufacturing armatures for electric motors with a commutator (34) comprising
a step of assembling and fitting an armature core (31) to a shaft (33),
a step of assembling an armature coil (32) to said armature core (31),
a step of fitting, to said shaft (33), a commutator (34) having a plurality of commutator segments (34b) on its outer circumference each of which has a coil connecting part (34e) to connect said armature coil (32) in an axial direction and a lock member (34f) to prevent said armature coil (32) from going out in a centrifugal direction in said coil connecting part (34e) in a body on said commutator segment (34b) and inserting said armature coil (32) axially into said coil connecting part (34e) to assemble said armature coil (32) to said coil connecting part (34e), and
a step of hot-crimping said coil connecting parts (34e) having said armature coil (32) thereon.

6. The method according to claim 5, wherein the through-groove that axially extends on the conductor segment forms said coil connecting part (34e) and said lock member (34f) that extends into said groove near the outer circumference of the groove.

7. The method according to claim 5 or 6, wherein the through-hole that axially extends on the conductor segment forms said coil connecting part (34e) and said lock member (34f) is formed beyond said through-hole on the outer circumference of said commutator segment (34b).

8. The method according to at least one of claims 5 to 7, wherein the hot-crimping of said coil connecting part (34e) makes said lock members (34f) nearer to the center than before the hot-crimping.

9. The method according to at least one of claims 5 to 8, wherein
the connecting part between said armature coil (31) and said coil connecting part (34e) is narrower than the part assembled in said armature core (31),
the front end of said connecting part of said armature coil (32) is made narrower than said connecting part, and said connecting part containing said front part that protrudes axially from the commutator segment (34b) is cut out after said connecting part of said armature coil (32) is assembled to said coil connecting part (34e).

10. A starter for starting an internal combustion engine comprising an electric motor which generates rotational power to start the engine, a transmission mechanism which transmits said rotational power of the motor to the engine, and a switching mechanism which controls electric connection between said electric motor and a power supply, wherein
said electric motor consists of a yoke (10) having a magnetic field and an armature (30) that can rotate with an air gap therebetween,
said armature (30) consist of a shaft (33), an armature core (31) on the shaft (33), an armature coil (32) wound on the armature core (31), and a commutator (34) provided on the shaft (33);
a plurality of said commutator segments (34b) are provided on the outer circumference of said commutator (34) to be in contact with brushes (35) that are connected to said armature coil (32) to transfer power to and from said armature (30);
each of said commutator segments (34b) is equipped with a coil connecting part (34e) for connection with said armature coil (32) and a lock member (34f) to prevent said armature coil (32) from going out in the centrifugal direction at the coil connecting part (34e);
the coil connecting part (34e) is formed so that said armature coil (32) may be assembled axially; and
said lock member (34f) is formed in a body as the result of formation of said coil connecting part (34e) on said commutator segment.

11. The starter according to claim 10, wherein said coil connecting part (34e) is a through-groove that axially extends and said lock member (34f) is a protrusion that extends into said groove.

12. The starter according to claim 10 or 11, wherein said coil connecting part (34e) is a through-hole that axially extends and said lock member (34f) is formed beyond said through-hole on the circumferential circumference of said commutator segment (34b).

13. The starter according to at least one of claims 10 to 12, wherein said lock member (34f) is hot-crimped and this hot crimping makes the circumferential surface of the commutator segment (34b) patterned indented.

14. The starter according to at least one of claims 10 to 13, wherein a reduction gear mechanism is provided between said electric motor and said transmission mechanism.

15. The starter according to at least one of claims 10 to 14, wherein said switching mechanism also works as a starter,
the driving force of said actuator is transmitted to said transmission mechanism via a lever, and
this driving force drives said transmission mechanism axially.
